# EUROPÄISCHE PATENTSCHRIFT

(11) **EP 0 374 629 B1**
(45) Veröffentlichungstag und Bekanntmachung des Hinweises auf die Patenterteilung: **30.08.1995**
(21) Anmeldenummer: 89122663.1
(22) Anmeldetag: 08.12.1989
(51) Int. Cl.: B32B 7/12, B32B 27/08, C08G 18/08

(54) **Transparente Laminate**
Transparent laminates
Stratifié transparent

(30) Priorität: 21.12.1988 DE 3842966
(43) Veröffentlichungstag der Anmeldung: 27.06.1990
(73) Patentinhaber: BAYER AG, 51368 Leverkusen (DE)
(72) Erfinder: Hassel, Tillmann, Dr., D-5000 Köln 80 (DE); Müller, Hanns-Peter, Dr., D-5060 Bergisch-Gladbach 2 (DE)

(56) Entgegenhaltungen:
- EP-A- 0 054 491
- EP-A- 0 140 068
- EP-A- 0 165 791
- US-A- 4 166 149

## Beschreibung

Die vorliegende Erfindung betrifft transparente Laminate aus hoch hydroxylgruppenhaltigen Polymeren und speziellen Polyurethan-Polyharnstoffen als Adhäsionsschichten (Haftvermittler), die weiterhin verschiedene Materialien als Deckschichten tragen können.

Polymerfolien aus Polyvinylalkohol (PVAL) sowie den Copolymeren mit Olefinen zeichnen sich besonders durch zwei wertvolle Eigenschaften aus: Sie besitzen eine gute Barrier-Wirkung gegen Sauerstoff und im gereckten Zustand ein hervorragendes Orientierungsvermögen für eingelagerte Fremdstoffe, wie Iod oder Farbstoffe. Wegen der Barrier-Wirkung werden entsprechende Folien als integrierter Bestandteil von Verpackungsfolien, besonders zur Frischhaltung von Lebensmitteln, verwendet. Das Orientierungsvermögen für eingelagerte Fremdstoffe findet seine technische Nutzung in der Herstellung beispielsweise von Polarisationsfolien, wo homopolymerer PVAL jedem anderem Material überlegen ist.

Ein gravierender Nachteil derartiger Folien ist dagegen ihre große Empfindlichkeit gegen Feuchtigkeit. Daher weisen technische Verpackungs- und Polarisationsfolien mit einer PVAL-Wirkschicht in der Regel einen Mehrschichtenaufbau auf; PVAL-Folien werden demzufolge je nach Verwendungszweck ein- oder beidseitig mit Schutzfolien laminiert.

Zur Herstellung derartiger Verbundfolien ist eine Verklebung der Deckschicht mit der Wirkschicht (Kernschicht) erforderlich. Diese Verklebung gelingt im Falle hoch polyolefinhaltiger PVAL-Copolymerer (verseifte Ethylen-Vinylacetat (EVA)-Typen) ohne spezielle Zwischenschicht, wie beispielsweise aus JP 52/115 881 (1977), JP 62/46 643 (1987) und JP 62/46 644 (1987) hervorgeht.

Bekannt ist weiterhin die Laminierung verseifter EVA-Typen zur Herstellung von Verpackungsmaterialien unter Verwendung spezieller Klebschichten, wie thermoplastischer Copolyestergemische (EP 118 226) und modifizierter Polyolefine (JP 58/24 451 (1983); EP 186 894).

Auch eine Laminierung durch Plasmabehandlung der zu verklebenden Schichten ist bei verseiften EVA-Typen möglich (JP 61/280 930 (1986)).

Wesentlich schwieriger ist die Herstellung von Laminaten mit reiner (homopolymerer) Polyvinylalkohol-Wirkschicht, wie sie für Polarisationsfolien üblich ist. Bei solchen Polarisationsfolien dient die Laminierung hauptsächlich dem Schutz der Iod- oder Farbstoff-dotierten Wirkschicht gegen Feuchtigkeitseinwirkung; die laminierten Folien werden bei der Verwendung, beispielsweise in Displays, noch zusätzlich verklebt. Eine alte Methode zur Erzielung eines besseren Feuchtigkeitsverhaltens der PVAL-Folien nutzt die Vernetzungsreaktion der PVAL-Matrix mit Borsäure aus. Sie liefert jedoch nur unzureichende Resultate. Bessere Ergebnisse werden durch Beschichten der Folie mit haft- und vernetzungsfähigen organischen Systemen erhalten. Derartige Systeme sind beispielsweise Gemische von Epoxidharzen mit Polyamiden (JP 54/133 356 (1979) und JP 54/163 051 (1979)) sowie verzweigte Polyurethan-Polyacrylate mit ungesättigten Gruppen, die durch UV-Strahlen vernetzt werden (JP 56/80 001 (1981), JP 55/36 862 (1980) und JP 55/12 930 (1980)).

Üblicherweise werden jedoch PVAL-Polarisationsfolien in Form echter Laminate hergestellt. Zur Verklebung der Wirkschicht (Kernschicht) mit der Deckschicht werden mit Aminen, Säureanhydriden oder Polyamiden aushärtende Epoxidharze als geeignet beschrieben (DE-OS 15 94 044; US 4.416.946). Auch Acrylatsysteme sind bereits eingesetzt worden, wobei man monomere und oligomere Systeme mit Vinylgruppen einsetzt, die nach Aufbringen der Deckschicht thermisch, radikalisch oder fotochemisch gehärtet werden können (JP 56/33 610 (1981), JP 59/58 410 (1984), JP 59/48 714 (1984), JP 58/171 008 (1983)). Weiterhin sind Mischungen von Polyacrylaten mit Phenolharzen, die in Lösung aufgebracht werden, als Klebschicht beschrieben (JP 55/155 307 (1980)). Schließlich hat man vereinzelt auch Isocyanatklebstoffe (JP 53/47 696 (1978)) und Polyurethane (JP 60/159 704 (1985)) als Zwischenschicht für die Laminierung eingesetzt.

Die Laminierungsmethoden des Standes der Technik haben verschiedene Nachteilen. Die für Verpackungsfolien verwendeten Adhäsionsschichten sind nur zum Verkleben verseifter EVA-Typen sowie entsprechender Copolymerer mit weiteren Olefinen geeignet, so daß die sehr gute Barrier-Wirkung von reinem (homopolymeren) PVAL nicht voll ausgenutzt werden kann. Bei Polarisationsfolien sind andere Nachteile vorhanden. Die nur mit einer feuchtigkeitssperrenden Deckschicht versehenen Folien müssen beim Einbau, beispielsweise in Displays, durch eine zusätzliche Schicht erneut verklebt werden, da die Deckschicht keine Klebwirkung mehr besitzt. Bei den echten Laminaten mit Kleb(adhäsions)- und Deckschicht besteht dieser Nachteil ebenfalls. Darüber hinaus sind die zur Laminierung eingesetzten Kleb(adhäsions)-Schichten (Epoxi- und Acrylsystem) nur zur sofortigen Verklebung mit den Deckschichten geeignet, weil es sich um Monomere und Oligomere handelt, die erst nach Aushärtung zu einem stabilen Laminat führen. Zudem müssen die Adhäsionsschichten in ihrer chemischen Beschaffenheit auf die jeweilige Deckschicht optimiert werden, um einen qualitativ hochwertigen Verbund (Laminat) zu erzeugen.

Daher existiert bisher keine Beschichtung für PVAL, die das Material gegen Feuchtigkeitseinwirkung schützt, unter Normalbedingungen klebfrei ist, damit problemlosen Transport der mit einer Adhäsionsschicht ausgerüsteten Folie gestattet und dennoch die Verklebung mit üblicherweise verwendeten Deckschichten zu einem beliebigen Zeitpunkt ohne ein zusätzliches Aufbringen weiterer Adhäsionsschichten erlaubt.

Die Erfindung betrifft neue Laminate aus hoch hydroxylgruppenhaltigen transparenten Polymeren als Kernschicht und ein- oder beidseitig angebrachten, unter Normalbedingungen klebfreien Adhäsionsschichten, die je eine Deckschicht aufnehmen können, die dadurch gekennzeichnet sind, daß als Adhäsionsschichten thermoplastische Polyurethan-Polyharnstoffe verwendet werden, die eine weitgehend lineare Molekularstruktur mit ausschließlich aliphatisch oder cycloaliphatisch gebundenen Urethan- und Harnstoffsegmenten haben und einen Gehalt an Harnstoffgruppen -NH-CO-NH- von 1 bis 20 Gew.-% sowie einem Gehalt an seitenständigen, unmittelbar mit der Hauptkette des Moleküls verbundenen Carboxylgruppen -COOH von 0,001 bis 10 Gew.-%, alles bezogen auf das Gesamtgewicht der Polyurethan-Polyharnstoffe, aufweisen.

Hoch hydroxylgruppenhaltige Polymere als Kernschicht für die erfindungsgemäßen Laminate sind beispielsweise solche wie sie durch Polymerisation von (Meth)Acrylsäure-Hydroxylalkylestern oder durch Polymerisation geeigneter (Meth)Allylalkoholderivate nach Schutzgruppenabspaltung zugänglich sind. Weiterhin geeignet sind Homopolymerisate von Vinylestern oder deren Copolymerisate mit Olefinen, aus denen durch Verseifung die zugehörigen hydroxylgruppenhaltigen Polymeren hergestellt werden können. Solche hydroxylgruppenhaltigen Polymere können weiterhin durch Zusatz geringer Mengen an (blockierten) Polyisocyanaten schwach vernetzt sein, die ihre Transparenz nicht beeinflussen. In bevorzugter Weise werden als Kernschicht für die erfindungsgemäßen Laminate verseifte, Vinylacetat enthaltende Polymere mit einem Vinylacetatgehalt von 30 bis 100 Mol-% aller Monomeren und einem Verseifungsgrad des Vinylacetats von 40 bis 100 %, bevorzugt 50 bis 100 %, besonders bevorzugt 60 bis 100 %, eingesetzt. Der zu 100 Mol-% aller Monomeren fehlende Monomergehalt besteht hierbei aus einem oder mehreren geradkettigen oder verzweigten C₂-C₈-Alkenen, bevorzugt C₂-C₄-Alkenen, besonders bevorzugt aus Ethylen.

Da verseifte EVA-Typen als Kernschicht für Verpackungsmaterialien bei hohem Olefingehalt auch anderweitig verklebt werden können, andererseits die Barrier-Wirkung mit steigendem Hydroxylgruppengehalt zunimmt und bei Polarisationsfolien ebenfalls ein sehr hoher Hydroxylgruppengehalt im Polymer der Kernschicht die besten Ergebnisse bringt, sind im Sinne der vorliegenden Erfindung solche Laminate bevorzugt, deren Kernschicht bei höheren Vinylacetat(VA)-Gehalten im angegebenen Bereich und bei höheren Verseifungsgraden im angegebenen Bereich liegt; ganz besonders bevorzugt sind daher VA-Homopolymere oder EVA-Typen mit einem Olefingehalt von höchstens 50 Mol-% aller Monomerer, beispielsweise 50 bis 0,1 Mol-% an Olefinen, bezogen auf alle Monomere. Der Verseifungsgrad befindet sich bei 70 bis 100 % aller VA-(Co)Monomerer.

In ganz besonders bevorzugter Weise werden Kernschichten aus Vinylacetat enthaltenden (Co)Polymeren eingesetzt, deren Olefingehalt weniger als 10 Mol-% aller (Co)Monomeren beträgt und deren Verseifungsgrad 90 % überschreitet.

Beim Einsatz für Polarisationsfolien besteht die Kernschicht ganz besonders bevorzugt aus dem beschriebenen Polymeren mit äußerst hohem Vinylacetatgehalt (95-100 Mol-%) und sehr hohem, nahezu 100 %igem Verseifungsgrad (95-100 Mol-%), beispielsweise aus soweit wie möglich verseiften Homopolyvinylacetat (nahezu reiner Polyvinylalkohol). Solche Kernschichten werden zur Erzielung des Polarisationseffektes mit dichroitischen Farbstoffen und/oder Iod versehen und davor oder danach gereckt, wobei zur besseren Verarbeitbarkeit Weichmacher zugesetzt sein können. Es wurde gefunden, daß auch derartig vorbehandelte Folien ohne Verlust ihrer Polarisationswirkung erfindungsgemäß in die beschriebenen Laminate umgearbeitet werden können.

Die Kernschicht der erfindungsgemäßen Laminate trägt ein- oder beidseitig angebrachte Adhäsionsschichten aus dem weiter unten beschriebenen thermoplastischen Polyurethan-Polyharnstoff. Im Sinne eines Schutzes der hoch hydroxylgruppenhaltigen Kernschicht sind Laminate mit beidseitig angebrachten Adhäsionsschichten bevorzugt, jedoch sind auch Anwendungsfälle denkbar, bei denen eine einseitig angebrachte Adhäsionsschicht erforderlich ist, weil die zweite Seite der Kernschicht anderweitig geschützt ist oder zugänglich bleiben soll.

Die erfindungsgemäßen Laminate können auf jeder Adhäsionsschicht eine Deckschicht aufnehmen. Solche Deckschichten sind im allgemeinen ebenso wie die Kernschicht transparent und bestehen beispielsweise aus Silikatglas oder einem transparenten Kunststoff, wobei die beidseitig aufgenommenen Deckschichten aus dem gleichen oder verschiedenen Materialien bestehen können. Solche transparenten Kunststoffe sind beispielsweise aromatische Polyester, Polyacrylnitrile (PAN), Poly(meth)acrylate (PMMA), Polysulfone, aromatische Polycarbonate (PC), Celluloseester, wie Celluloseacetate (CA), Celluloseacetobutyrate (CAB) oder Celluloseacetopropionate (CAP) oder Polyamide (PA) sowie weiter Polyheterocyclen, wie Polyhydantoine, Polyimide, Polyamidimide, Polyparaphenylenbenzo-bis-imidazole und -oxazole.

In bevorzugter Weise werden Deckschichten aus aromatischen Polyestern, Polyamiden, aromatischen Polycarbonaten, Poly(meth)acrylaten, Celluloseestern und Silikatglas eingesetzt.

In ganz besonders bevorzugter Weise werden aromatische Polycarbonate, Poly(meth)acrylate oder Cellulosetriacetate sowie Silikatglas als ein- oder beidseitig aufgebrachte Deckschicht eingesetzt.

Für die erfindungsgemäßen Laminate ist der Einsatz spezieller Polyurethan-Polyharnstoffe als Adhäsionsschicht(en) wesentlich. Diese speziellen, transparenten und hoch lichtechten thermoplastischen Polyurethan-Polyharnstoffe haben eine weitgehend lineare Molekularstruktur und Urethan- und Harnstoff-Segmente, die ausschließlich aliphatisch oder cycloaliphatisch gebunden sind; sie zeichnen sich aus durch
a) einen Gehalt an Harnstoffgruppen -NH-CO-NH- von 1 bis 20 Gew.-%, bevorzugt 2 bis 10 Gew.-% und
b) einen Gehalt an seitenständigen, unmittelbar mit der Hauptkette des Moleküls verbundenen Carboxylgruppen -COOH von 0,001 bis 10 Gew.-%, bevorzugt 0,008 bis 6 Gew.-%, alles bezogen auf das Gesamtgewicht der Polyurethan-Polyharnstoffe.

Solche Polyurethan-Polyharnstoffe sind bekannt aus DE-OS 26 44 434 sowie den hierzu äquivalenten US 4.166.149, US 4.174.240 und US 4.254.176. Sie vermitteln eine ausgezeichnete Haftung zwischen hoch hydroxylgruppenhaltigen Polymeren und Glas und vielen transparenten Kunststoffen, wie sie weiter oben für die Kernschicht und die Deckschichten genannt worden sind.

Darüber hinaus besitzen sie eine gute Barrier-Wirkung gegen Wasser, wie aus der hervorragenden Kantenstabilität im Kochtest entsprechender Laminate hervorgeht, und sind unter Normalbedingungen klebfrei. Diese Anforderungen entsprechen in überragender Weise dem Anforderungsprofil für eine Adhäsionsschicht für hoch hydroxylgruppenhaltige, speziell PVAL-Kernschichten, was bisher nicht bekannt war und aus den bisherigen Anwendungsgebieten nicht möglich zu sein schien, da die bisher damit laminierten Kunststoffe sich in ihren Oberflächeneigenschaften signifikant von den erfindungsgemäß eingesetzten Kernschichten aus hoch hydroxylgruppenhaltigen, transparenten Polymeren unterscheiden.

Bekannte aliphatische Einkomponenten- und Zweikomponenten-Polyurethanreaktionsklebstoffe sind als Kleber für die Laminierung hoch hydroxylgruppenhaltiger Polymerer üblicherweise nicht geeignet. Es war daher äußerst überraschend und für den Fachmann im Hinblick auf die bekannten Probleme der Laminierung von hoch hydroxylgruppenhaltigen Polymeren, wie PVAL, nicht vorhersehbar, daß die obengenannten, speziell für die Laminierung von Glas und hydroxylgruppenfreien transparenten Kunststoffen optimierten Polyurethan-Polyharnstoffe auch zur Laminierung von hoch hydroxylgruppenhaltigen Polymeren verwendet werden können. Die Erfindung besteht demzufolge darin, daß unter Verwendung der oben beschriebenen Polyurethan-Polyharnstoffe als Adhäsionsschichten glasklare laminierte Schichtstoffe (Laminate) zugänglich sind, in denen die Kernschicht aus einem hoch hydroxylgruppenhaltigen Polymer besteht und die sich durch gute Haftung der verschiedenen Teile des Laminats (Kernschicht, Adhäsionsschicht(en) bzw. Deckschicht(en)) auszeichnen.

Die Herstellung der erfindungsgemäß einzusetzenden Polyurethan-Polyharnstoffe erfolgt beispielsweise nachdem Prepolymer-Prinzip, d.h., durch Umsetzung einer überschüssigen Menge eines geeigneten Diisocyanats mit Dihydroxylverbindungen zu den entsprechenden, endständige Isocyanatgruppen aufweisenden Prepolymeren und anschließender Kettenverlängerung dieser Prepolymeren mit Diamin-Kettenverlängerungsmitteln. Dabei können gegebenenfalls zwecks Regulierung des Molekulargewichtes und damit zwecks Einstellung der physikalischen Eigenschaften des Polymeren monofunktionelle Reaktionspartner als Kettenabbrecher in geringen Mengen mitverwendet werden. Im allgemeinen werden Art und Mengenverhältnisse der Aufbaukomponenten so gewählt, daß sich ein rechnerisches Molekulargewicht zwischen 10.000 und 500.000, vorzugsweise 20.000 und 200.000, ergibt. Die difunktionellen Aufbaukomponenten werden bei der Herstellung erfindungsgemäß einzusetzender Polyurethan-Polyharnstoffe im allgemeinen in solchen Mengen eingesetzt, daß pro Hydroxylgruppe der alkoholischen Aufbaukomponente 1,1 bis 4, vorzugsweise 1,2 bis 3, Isocyanatgruppen und 0,1 bis 3, vorzugsweise 0,2 bis 2, Aminogruppen des Kettenverlängerungsmittels zum Einsatz gelangen.

Zur Herstellung geeignete Diisocyanate sind solche mit aliphatisch und/oder cycloaliphatisch gebundenen Isocyanatgruppen der Formel Q(NCO)₂, worin Q für einen aliphatischen Kohlenwasserstoffrest mit 2 bis 12 C-Atomen oder einen cycloaliphatischen bzw. gemischt aliphatisch-cycloaliphatischen Kohlenwasserstoffrest mit 4 bis 15 C-Atomen steht. Beispiele derartiger Diisocyanate sind Ethylendiisocyanat, Tetramethylendiisocyanat, Hexamethylendiisocyanat, Dodecamethylendiisocyanat, Cyclobutan-1,3-diisocyanat, Cyclohexan-1,3- und 1,4-diisocyanat, 4,4′-Diisocyanato-dicyclohexylmethan oder 1-Isocyanato-3,3,5-trimethyl-5-isocyanatomethyl-cyclohexan (Isophorondiisocyanat) bzw. beliebige Gemische derartiger Diisocyanate. Vorzugsweise werden cycloaliphatische bzw. gemischt aliphatisch-cycloaliphatische Diisocyanate, besonders bevorzugt Isophorondiisocyanat, eingesetzt.

Bei der alkoholischen Aufbaukomponente handelt es sich um
i) die aus der Polyurethanchemie an sich bekannten höhermolekularen Diole des Molekulargewichtsbereiches 300 bis 6.000, vorzugsweise 800 bis 3.000,
ii) Dihydroxycarbonsäuren der Formel 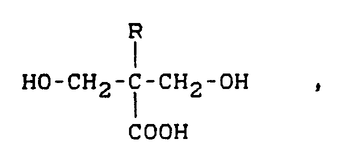 in welcher
   - R: für Wasserstoff oder einen C₁-C₄-Alkylrest steht und gegebenenfalls
iii) niedermolekulare aliphatische oder cycloaliphatische Diole, vorzugsweise des Molekulargewichtsbereichs 62 bis 300.

Die Mengenverhältnisse der einzelnen Komponenten i), ii) und iii), die gleichzeitig oder sukzessive mit der Isocyanatkomponente umgesetzt werden können, werden dabei vorzugsweise so gewählt, daß pro Hydroxylgruppe der Komponente i) 0,01 bis 12 Hydroxylgruppen der Komponente ii) und 0 bis 10 Hydroxylgruppen der Komponente iii) vorliegen. Bei der Komponente i) handelt es sich um die an sich bekannten Polyester-, Polyether-, Polythioether-, Polyacetal- oder Polyesteramid-Diole. Vorzugsweise werden die an sich bekannten Polyester- oder Polyether-Diole der Polyurethanchemie eingesetzt. Ihre Herstellung und Zusammensetzung ist dem Fachmann bekannt.

Bei der Komponente ii) der genannten Formel handelt es sich beispielsweise um Dimethylol-Essigsäure, α,α-Dimethylol-Propionsäure oder α,α-Dimethylol-n-Valeriansäure α,α-Dimethylol-Propionsäure ist bevorzugt. Auch bei der Komponente iii) handelt es sich um Glykole der dem Fachmann bekannten Art.

Geeignete Diamin-Kettenverlängerungsmittel sind vorzugsweise primäre Aminogruppen aufweisende aliphatische, cycloaliphatische oder gemischt aliphatisch-cycloaliphatische Diamine des Molekulargewichtsbereichs 60 bis 300. Beispiele hierfür sind: Ethylendiamin, Tetramethylendiamin, Hexamethylendiamin, 4,4′-Diamino-dicyclohexylmethan, 1,4-Diaminocyclohexan, 4,4′-Diamino-3,3′-dimethyl-dicyclohexylmethan oder 1-Amino-3,3,5-trimethyl-5-aminomethyl-cyclohexan (Isophorondiamin). Bevorzugt werden 4,4′-Diamino-dicyclohexylmethan oder Isophorondiamin eingesetzt.

Monofunktionelle Reaktionspartner zur Einstellung des gewünschten Molekulargewichts (Kettenabbrecher) werden im allgemeinen in Mengen von 0,05 bis 3, bevorzugt 0,1 bis 1 Gew.-%, bezogen auf die Gesamtmenge der Aufbaukomponenten, mitverwendet. Beispielhaft seien als monofunktionelle Reaktionspartner genannt: Monoisocyanate, wie Methylisocyanat; Monoalkohole, wie Methanol, Ethanol, Butanol, tert.-Butanol, Octanol, Isopropanol, Cyclohexanol; Monoamine, wie Methylamin, Butylamin, Dibutylamin.

Die Herstellung der als Adhäsionsschichten in den erfindungsgemäßen Laminaten einzusetzenden Polyurethan-Polyharnstoffe geschieht in der Prepolymerstufe im allgemeinen bei etwa 80 bis 150°C. Der Endpunkt der Reaktion wird durch NCO-Titration ermittelte. Nach der Prepolymerbildung erfolgt dann die Kettenverlängerungsreaktion mit dem Diamin-Kettenverlängerungsmittel entweder in der Schmelze oder in Lösung, wobei hierfür geeignete Lösemittel dem Fachmann bekannt sind. Die Kettenverlängerungsreaktion kann besonders vorteilhaft in beheizten Reaktionsschneckenmaschinen durchgeführt werden. Zur Kettenverlängerungsreaktion wird eine Temperatur von 120 bis 300°C, bevorzugt 150 bis 250°C, eingestellt.

Die Dicke der Adhäsionsschichten in den erfindungsgemäßen Laminaten ist in beliebigen Grenzen einstellbar und nicht erfindungswesentlich. Beispielsweise seien Dicken von 0,5 »m bis 5 mm genannt. Je nach Anwendung der Laminate werden Teilbereiche hieraus bevorzugt. So benutzt man für Polarisationsfolien, Displays und optische Elemente Dicken der Adhäsionsschichten von 0,5 bis 50 »m, bevorzugt 0,5 - 20 »m, während für Verpackungszwecke Dicken von 20 »m - 5 mm, bevorzugt 50 »m bis 1 mm in Frage kommen. Solche Adhäsionsschichten können nach bekannten Folienextrusionsverfahren erhalten werden oder aber dadurch, daß Lösungen der Polyurethan-Polyharnstoffe in geeigneten Lösungsmitteln, beispielsweise in Methylenchlorid oder in einem Toluol/Isopropanol-Gemisch über Gießmaschinen auf glatte, schlecht haftende Unterlagen aufgegossen und das Lösungsmittel abgedampft wird. Von diesen glatten, schlecht haftenden Unterlagen können die Adhäsionsschichten danach abgezogen werden.

Der Verbund zwischen der Kernschicht und der (den) Adhäsionsschicht(en) kann grundsätzlich durch Aufbringung der aufgeschmolzenen Polyurethan-Polyharnstoffe (Flammkaschierung) oder durch direktes Aufgießen einer Polyurethan-Polyharnstofflösung erzeugt werden. Man kann den Verbund aber auch durch Co-Extrusion von Kern und Adhäsionsschicht(en) herstellen. Die einzusetzenden Polyurethan-Polyharnstoffe weisen Schmelzpunkte im Bereich von 60 bis 180°C auf und können demzufolge im Temperaturbereich oder höher (bis 250°C) co-extrudiert oder flammkaschiert werden. Des weiteren können separat hergestellte Adhäsionsschichten, etwa durch Anlösen, aufgebracht werden.

Für den Fall von Deckschichten tragenden erfindungsgemäßen Laminaten kann demzufolge so vorgegangen werden, daß auf die Kernschicht eine Adhäsionsschicht als Lösung aufgetragen wird, wobei die Adhäsionsschicht nach Abdampfen des Lösungsmittels gebrauchsfertig ist. Dieser Vorgang kann gegebenenfalls auf der zweiten Seite der Kernschicht wiederholt werden. Auf diese so ein- oder beidseitig laminierte Kernschicht kann sodann eine oder zwei Deckschichten gleichzeitig oder nacheinander aufgelegt werden. Der Verbund wird dann durch Erhitzen dieses Sandwichs auf den Schmelzpunkt der Adhäsionsschicht unter gleichzeitiger Einwirkung eines Druckes von 5 bis 50 bar erzeugt. Es kann jedoch auch so vorgegangen werden, daß eine oder zwei Deckschichten durch Aufgießen einer Lösung oder durch Co-Extrusion mit einem der beschriebenen Polyurethan-Polyharnstoffe laminiert werden und daß unter Einfügung einer Kernschicht beispielsweise ein Laminat der Zusammensetzung Deckschicht/Adhäsionsschicht/Kernschicht/Adhäsionsschicht/Deckschicht erzeugt wird. Es ist auch möglich, ein derartiges Laminat dadurch herzustellen, daß man die einzelnen, getrennt hergestellten Schichten aufeinander legt und unter Beachtung der angegebenen Temperatur- und Druckparameter zum Laminat verbindet. In besonders hervorragender Weise eignen sich die erfindungsgemäßen Laminate, die zunächst nur aus der Kernschicht und einer oder zwei Adhäsionsschichten bestehen zur Herstellung von bereits genannten erweiterten Laminaten, bei denen die vorgesehenen Deckschichten jedoch erst später im Verlaufe einer separaten Verwendung dieser Laminate aufgebracht wird. In einem solchen Falle wird ein erfindungsgemäßes Laminat, das beispielsweise den Aufbau Adhäsionsschicht/ Kernschicht/Adhäsionsschicht hat, beidseitig durch Kaschieren mit einer schlecht haftenden, abziehbaren Deckfolie, beispielsweise aus Polyethylen oder silikonisiertem Papier, gegen Verschmutzung geschützt und so für einen Transport vorbereitet.

Neben der Druckverklebung unter erhöhter Temperatur ist auch ein Anquellen der Polyurethan-Polyharnstoff-Adhäsionsschichten mit einem geeigneten Lösungsmittel, beispielsweise Methylenchlorid oder Tetrahydrofuran, möglich, wobei nach Anlegen der weiteren Schichten des oben beschriebenen mehrschichtigen Laminats, ebenfalls unter Druck aber ohne Anwendung erhöhter Temperatur, ein Verbund erzeugt werden kann.

Die Verwendungsmöglichkeiten der erfindungsgemäßen Laminate sind durch das Eigenschaftsprofil der Kernschicht bestimmt. Dieses Eigenschaftsprofil wird innerhalb der erfindungsgemäßen Laminate nicht verändert. Die Erfindung betrifft daher weiterhin die Verwendung der erfindungsgemäßen Laminate zur Herstellung von Polarisationsfolien, Displays und optischen Elementen. Die Erfindung betrifft weiterhin die Verwendung der erfindungsgemäßen Laminate zur Herstellung von Verpackungen.

### Beispiel 1 (nach DE-OS 26 44 434)

Herstellung eines Polyurethan-Polyharnstoffes in der Schmelze.
A) In einem Rührwerkskessel wurden bei 60°C unter Stickstoff 70 kg (31,2 Mol) eines linearen Butandiol-(1,4)-polyadipats mit endständigen OH-Gruppen und einem Durchschnittsmolekulargewicht von etwa 2200 und 34,7 kg (156,3 Mol) 1-Isocyanato-3-isocyanatomethyl-3,3,5-trimethyl-cyclohexan (Isophorondiisocyanat) über Nacht gerührt. Anschließend wurden 7,5 kg (83,3 Mol) Butandiol-(1,4) und 1,4 kg (10,45 Mol) Dimethylolpropionsäure zugegeben und weitere 2 Stunden bei 100°C gerührt. Danach wurde ein Gehalt an freien NCO-Gruppen von 2,2 % gefunden.
B) Über getrennte Leitungen wurden kontinuierlich pro Sekunde 600 g (0,313 Mol) des nach Vorschrift A) erhaltenen NCO-Prepolymers und 26,6 g (0,313 Mol) Isophorondiamin in den Einspeisetrichter einer handelsüblichen, beheizten Zweiwellen-Reaktionsschneckenmaschine dosiert. Die Schneckenwellen waren mit Förder- und Knetelementen bestückt. Das Verhältnis von Länge zu Durchmesser der Wellen betrug etwa 40. Bei einer Drehzahl von 200 min⁻¹ wurden über die Maschinenlänge Schmelztemperaturen von 120 bis 200°C gemessen. Die Produktschmelze wurde in einem Wasserbad abgeschreckt, anschließend mit Preßluft von anhaftendem Wasser befreit und granuliert. Das Reaktionsprodukt fiel in Form eines farblosen, glasklaren Harzes an und hatte einen -NH-CO-NH-Gehalt von 2,46 Gew.-%. Der Gehalt an -COOH betrug 0,4 Gew.-%.

### Beispiel 2

Der Polyurethan-Polyharnstoff (PU-Polyharnstoff) gemäß Beispiel 1 wurde mit Methylenchlorid zu einer 5 %.igen Lösung gelöst. Die erhaltene Lösung wurde beidseitig auf eine 10 »m dicke PVA-Gießfolie (Mowiol® 28-99 der Fa. Hoechst) in 400 »m Schichtdicke (als Lösung) aufgerakelt. Nach Abdunsten des Lösungsmittels erhielt man ein glasklares Laminat einer Gesamtdicke von 40 »m.

### Beispiel 3

Die 10 »m dicke PVA-Folie aus Beispiel 2 wurde analog Beispiel 2 beidseitig mit PU berakelt. Dann wurde auf die PU-Polyharnstoff-Schichten je eine 40 »m dicke Bisphenol-A-Polycarbonat-Gießfolie (Makrolon® 5700 der Fa. Bayer AG) aufgelegt. Der so vorbereitete Sandwich wurde auf 150°C erhitzt und bei dieser Temperatur 5 min bei einem Druck von 40 bar verpreßt. Es entstand ein transparentes Laminat von 90 »m Dicke. Die Schälfestigkeit eines 10 mm breiten Streifens der Verbundfolie wurde bei einem Schälwinkel von 90° und einer Reißgeschwindigkeit von 100 mm min⁻¹ zu 2 N ermittelt.

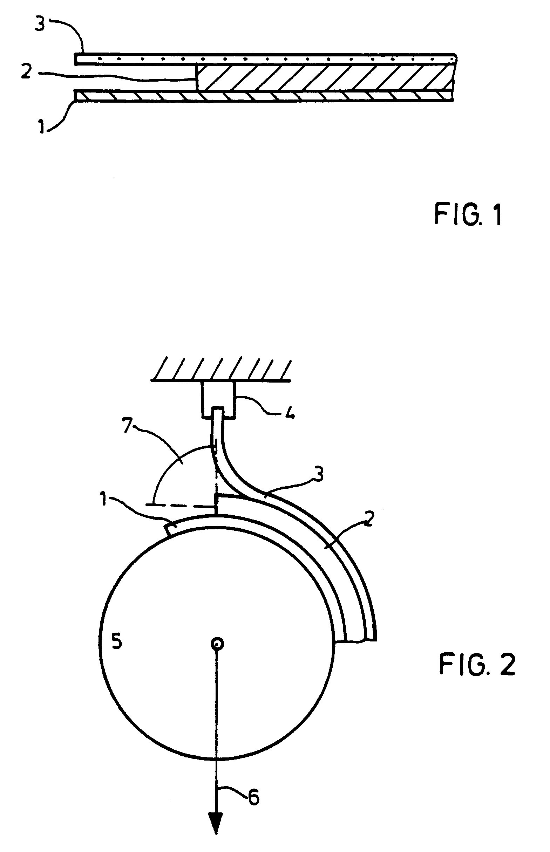

Zur Messung der Schälfestigkeit wurde ein nur einseitig mit einer Adhäsionsschicht und einer Deckschicht versehenes Laminat hergestellt, das gemäß Fig. 1 aus der Kernschicht (1), der Adhäsionsschicht (2) und der Deckschicht (3) bestand. Hierbei wurde die Adhäsionsschicht nicht bis zur vorderen Kante von (1) und (3) ausgeführt. Gemäß Fig. 2 wurde die Kernschicht (1) auf die Oberfläche einer Walze (5) geklebt und die Deckschicht (3) in eine fest angebrachte Spannvorrichtung (4) eingeklemmt. Die um ihre Achse drehbare Walze wurde nun mit einer Geschwindigkeit von 100 mm min⁻¹ in Richtung des Vektors (6) von der Spannvorrichtung (4) wegbewegt. Dabei stellt sich ein Delaminierungswinkel (Schälwinkel) von 90° ein. Die zur Aufrechterhaltung der angegebenen Schälgeschwindigkeit benötigte Kraft wurde gemessen. Je größer die erforderliche Kraft ist (Schälfestigkeit), desto besser ist die Haftung zwischen Adhäsionsschicht (2) und der Deckschicht (3) und/oder der Kernschicht (1).

### Beispiel 4

Die beidseitig PU-Polyharnstoff-laminierte PVA-Folie aus Beispiel 2 wurde zwischen eine 2 mm dicke Glasplatte und eine 1 mm dicke Bisphenol-A-Polycarbonatplatte (Makrolon® 3103) gelegt. Der Sandwich wurde analog Beispiel 3 verpreßt. Beim Trennversuch der erhaltenen Verbundplatte erfolgte Delaminierung unter Zerstörung der PVA-Schicht sowie in großen Bereichen sogar unter Zerstörung der Glasplatte; d.h., aus der Glasplatte wurde eine dünne Glasschicht ausgerissen.

### Beispiel 5

Die 10 »m dicke PVA-Folie aus Beispiel 2 wurde analog Beispiel 2 beidseitig mit PU berakelt Auf die PU-Schichten wurde je eine 20 »m dicke PET-Folie aufgelegt und 5 min bei 150°C und 30 bar verpreßt. Man erhielt ein 70 »m dickes Laminat mit einer analog Beispiel 3 ermittelten Schälfestigkeit von 1,2 N.

### Beispiel 6

Die doppelseitig PU-laminierte PVA-Folie aus Beispiel 2 wurde zwischen zwei 20 »m dicke Polymethylmethacrylat(PMMA)-Gießfolien gelegt. Der Sandwich wurde 5 min bei 150°C und 30 bar verpreßt. Er resultierte ein klares Laminat mit PMMA-Deckschichten von 70 »m Dicke. Eine Schälfestigkeit konnte nicht ermittelt werden, weil beim Trennversuch bereits beim Anriß die (zur Anwendung der Meßmethode) überstehenden Deckschichten abrissen, ohne daß Delaminierung auftrat.

### Beispiel 7

Analog Beispiel 6 wurde ein Laminat mit PVA-Kernschicht, PU-Klebschicht und Celluloseacetat-butyrat-Deckschicht hergestellt. Eine Schälfestigkeit des Verbundes konnte nicht gemessen werden, weil beim Trennversuch wie in Beispiel 6 beim Anriß die Deckschicht am Beginn des Verbundes abriß, ohne daß Delaminierung auftrat.

### Beispiel 8

Auf eine 20 »m dicke PET-Folie (DF 21 der Fa. Teijin) wurde die 5 %ige Methylenchloridlösung des Polyurethan-Polyharnstoffs aus Beispiel 1 in 400 »m Schichtdicke aufgerakelt. Nach Abdunsten des Lösemittels wurde eine 0,7 mm dicke, leicht vernetzte Ethylen-Vinylacetat (EVA)-Folie (70 % Ethylen, 30 % Vinylacetat) mit einem Verseifungsgrad >99 % auf die PU-Schicht aufgelegt. Diese Folie wurde erhalten durch Abmischen von 90 Gew.-% des beschriebenen, nahezu vollständig verseiften EVA mit 10 Gew.-% eines handelsüblichen blockierten Polyisocyanats und Aufschmelzen dieser Mischung zur Folie auf einer beheizten Platte, wobei gleichzeitig Vernetzung eintrat. Dieser Sandwich wurde auf der EVA-Seite noch mit einer PTFE-Trennfolie versehen. Durch Aufbügeln der verseiften EVA-Schicht bei einer Temperatur von 120 bis 150°C und anschließendem Abziehen der Trennfolie erhielt man ein transparentes Laminat mit einer wie in Beispiel 3 bestimmten Schälfestigkeit von 1,2 N.

### Beispiel 9

Aus einer 10 %igen Lösung eines Bisphenol A-Polycarbonats (Makrolon® 5700) in Methylenchlorid wurde eine 600 »m dicke Folie gegossen. Nach Abdunsten des Lösemittels überrakelte man diese Folie mit 400 »m einer 5 %igen Lösung des Polyurethan-Polyharnstoffs aus Beispiel 1. Durch Auflegen der in Beispiel 8 verwendeten verseiften EVA-Folie auf die Polyurethanschicht und Aufbügeln wie in Beispiel 8 erhielt man ein PC/PU-EVA-Laminat mit einer analog Beispiel 3 bestimmten Schälfestigkeit von 1,0 N. Beim Schälversuch trat Riß der Makrolon-Folie auf.

### Beispiel 10 (Verwendungsbeispiel)

Eine mit 2 % Direct Red 81 (Siriusrot 4 B der Firma Bayer AG) eingefärbte Polyvinylalkohol-Folie (Mowiol® 28 - 99 der Firma Hoechst AG) wurde um 680 % gereckt. Die gereckte 7 »m dicke Folie legte man zwischen die PU-Seiten zweier einseitig in 400 »m Schichtdicke mit der in Beispiel 2 angegebenen PU-Lösung berakelten und getrockneten 2 mm Glasplatten. Der Sandwich wurde für 5 min einer Temperatur von 150°C und einem Druck von 30 bar ausgesetzt. Es resultierte ein Polarisator für Licht der Wellenlänge 510 nm mit folgenden Eigenschaften:

| | |
|---|---|
| - Transmission für unpolarisiertes Licht | 37,40 % |
| - Polarisationsgrad | 99,82 %. |

## Patentansprüche

1. Laminate aus hoch hydroxylgruppenhaltigen transparenten Polymeren als Kernschicht und ein- oder beidseitig angebrachten, unter Normalbedingungen klebfreien Adhäsionsschichten, die je eine Deckschicht aufnehmen können, dadurch gekennzeichnet, daß als Adhäsionsschichten transparente thermoplastische Polyurethan-Harnstoffe verwendet werden, die eine weitgehend lineare Molekularstruktur mit ausschließlich aliphatisch oder cycloaliphatisch gebundenen Urethan- und Harnstoffsegmenten haben, einen Schmelzpunkt von 60 bis 180°C und einen Gehalt an Harnstoffgruppen -NH-CO-NH- von 1 bis 20 Gew.-% sowie einen Gehalt an seitenständigen, unmittelbar mit der Hauptkette des Moleküls verbundenen Carboxylgruppen -COOH von 0,001 bis 10 Gew.-%, alles bezogen auf das Gesamtgewicht der Polyurethan-Polyharnstoffe, aufweisen.

2. Laminate nach Anspruch 1, dadurch gekennzeichnet, daß die hoch hydroxylgruppenhaltigen Kernschichten verseifte, Vinylacetat enthaltende Polymere mit einem Vinylacetatgehalt von 30 bis 100 Mol-% aller Monomeren und einem Verseifungsgrad von 40 bis 100 %, bevorzugt 50 bis 100 %, besonders bevorzugt 60 bis 100 %, sind.

3. Laminate nach Anspruch 2, dadurch gekennzeichnet, daß der zu 100 Mol-% fehlende Monomergehalt des Vinylacetat enthaltenden Polymers aus einem oder mehreren geradkettigen oder verzweigten C₂-C₈-Alkenen, bevorzugt C₂-C₄-Alkenen, besonders bevorzugt aus Ethylen, besteht.

4. Laminate nach Anspruch 1, dadurch gekennzeichnet, daß beidseitig eine Adhäsionsschicht angebracht ist.

5. Laminate nach Anspruch 1, dadurch gekennzeichnet, daß die von den Adhäsionsschichten aufgenommenen Deckschichten aus Silikatglas und/oder transparenten Kunststoffen bestehen.

6. Laminate nach Anspruch 5, dadurch gekennzeichnet, daß die transparenten Kunststoffe solche aus den Klassen der aromatischen Polyester, der Polyamide, der Polysulfone, der Polyheterocyclen, der aromatischen Polycarbonate, der Poly(meth)acrylate, der Polyacrylnitrile sowie der Celluloseester sind.

7. Laminate nach Anspruch 1, dadurch gekennzeichnet, daß die hoch hydroxylgruppenhaltigen Polymeren der Kernschicht mit Zusätzen, wie dichroitischen Farbstoffen und/oder Iod, versehen sind und davor oder danach gereckt werden.

8. Laminate nach Anspruch 1, dadurch gekennzeichnet, daß die Adhäsionsschicht bis zur Aufnahme einer Deckschicht mit einer leicht entfernbaren Schutzschicht versehen ist.

9. Verwendung der Laminate nach Ansprüchen 1 bis 8 zur Herstellung von Polarisationsfolien, Displays und optischen Elementen.

10. Verwendung der Laminate nach Ansprüchen 1 bis 8 zur Herstellung von Verpackungen.

## Claims

1. Laminates made from transparent polymers having a high content of hydroxyl groups as the core layer and adhesive layers applied to one or both sides which are tack-free under normal conditions, and which can each accept an outer layer, the said laminates being characterized in that as adhesive layers, transparent thermoplastic polyurethane-ureas are used which have a substantially linear molecular structure with exclusively aliphatically or cyclo-aliphatically bonded urethane and urea segments, a melting point of 60 to 180°C and a content of urea groups -NH-CO-NH- of 1 to 20% by weight and a content of carboxyl groups -COOH bonded directly with the main chain of the molecule in lateral positions, of 0.001 to 10% by weight, all relative to the total weight of the polyurethane-polyureas.

2. Laminates according to Claim 1, characterized in that the core layers with a high content of hydroxyl groups are saponified polymers containing vinyl acetate with a vinyl acetate content of 30 to 100 mol-% relative to all monomers and a degree of saponification of 40 to 100%, preferably 50 to 100%, particularly preferably 60 to 100%.

3. Laminates according to Claim 2, characterized in that the monomer content of the polymer containing vinyl acetate required to make up 100 mol-% comprises one or more straight-chain or branched C₂-C₈-alkenes, preferably C₂-C₄-alkenes, particularly preferably ethylene.

4. Laminates according to Claim 1, characterized in that an adhesive layer is applied on both sides.

5. Laminates according to Claim 1, characterized in that the outer layers accepted by the adhesive layers comprise silicate glass and/or transparent plastics.

6. Laminates according to Claim 5, characterized in that the transparent plastics are those from the categories of aromatic polyesters, polyamides, polysulphones, polyheterocycles, aromatic polycarbonates, poly(meth)acrylates, polyacrylonitriles and cellulose esters.

7. Laminates according to Claim 1, characterized in that the polymers of the core layer having high contents of hydroxyl groups are provided with additives, such as dichroic dyestuffs and/or iodine, and are stretched beforehand or subsequently.

8. Laminates according to Claim 1, characterized in that the adhesive layer is provided with an easily removable protective layer until the incorporation of an outer layer.

9. Use of the laminates according to Claims 1 to 8 for the production of polarizing films, displays and optical elements.

10. Use of the laminates according to Claims 1 to 8 for the production of packagings.

## Revendications

1. Stratifiés constitués par des polymères transparents à teneur élevée en groupes hydroxyle, comme couche centrale, et par des couches d'adhérence non collantes dans des conditions normales, appliquées d'un côté ou des deux côtés, qui peuvent fixer respectivement une couche extérieure, caractérisés en ce que, comme couches d'adhérence, on utilise des polyuréthanne-urées thermoplastiques transparentes qui possèdent une structure moléculaire essentiellement linéaire avec des segments d'uréthanne et d'urée liés exclusivement à des radicaux aliphatiques ou cycloaliphatiques, un point de fusion de 60 à 180°C et qui présentent une teneur en groupes urée -NH-CO-NH- de 1 à 20% en poids, ainsi qu'une teneur en groupes carboxyle latéraux -COOH liés directement à la chaîne principale de la molécule, de 0,001 à 10% en poids, toutes ces proportions étant rapportées au poids total des polyuréthanne-polyurées.

2. Stratifiés selon la revendication 1, caractérisés en ce que les couches centrales à teneur élevée en groupes hydroxyle sont des polymères saponifiés contenant de l'acétate de vinyle, avec une teneur en acétate de vinyle de 30 à 100 moles % de tous les monomères et un degré de saponification de 40 à 100%, de préférence de 50 à 100%, de manière particulièrement préférée de 60 à 100%.

3. Stratifiés selon la revendication 2, caractérisés en ce que la teneur en monomères du polymère contenant de l'acétate de vinyle, qui manque pour atteindre les 100 moles %, est constituée par un ou plusieurs alcènes en C₂-C₈, de préférence alcènes en C₂-C₄ à chaîne droite ou ramifiée, de manière particulièrement préférée par de l'éthylène.

4. Stratifiés selon la revendication 1, caractérisés en ce qu'on applique une couche d'adhérence sur les deux côtés.

5. Stratifiés selon la revendication 1, caractérisés en ce que les couches extérieures fixées par les couches d'adhérence sont constituées par du verre silicaté et/ou par des matières synthétiques transparentes.

6. Stratifiés selon la revendication 5, caractérisés en ce que les matières synthétiques transparentes sont des matières synthétiques choisies parmi les classes des polyesters aromatiques, des polyamides, des polysulfones, des composés polyhétérocycliques, des polycarbonates aromatiques, des poly(méth)acrylates, des polyacrylonitriles, ainsi que des esters cellulosiques.

7. Stratifiés selon la revendication 1, caractérisés en ce que les polymères de la couche centrale à teneur élevée en groupes hydroxyle sont munis d'additifs tels que des colorants dichroïques et/ou de l'iode, et sont étirés au préalable ou ultérieurement.

8. Stratifiés selon la revendication 1, caractérisés en ce que la couche d'adhérence, jusqu'à la fixation d'une couche extérieure, est munie d'une couche de protection aisément pelliculable.

9. Utilisation des stratifiés selon les revendications 1 à 8, pour la préparation de feuilles de polarisation, d'écrans et d'éléments optiques.

10. Utilisation des stratifiés selon les revendications 1 à 8, pour la préparation d'emballages.
